# EUROPÄISCHE PATENTSCHRIFT

(11) **EP 4 218 075 B1**
(45) Veröffentlichungstag und Bekanntmachung des Hinweises auf die Patenterteilung: **03.07.2024**
(21) Anmeldenummer: 21783236.9
(22) Anmeldetag: 24.09.2021
(51) Int. Cl.: H01M 8/248

(54) **BRENNSTOFFZELLENANORDNUNG UND VERFAHREN ZUR HERSTELLUNG EINER BRENNSTOFFZELLENANORDNUNG**
FUEL CELL ASSEMBLY AND METHOD FOR PRODUCING A FUEL CELL ASSEMBLY
AGENCEMENT DE PILES À COMBUSTIBLE ET PROCÉDÉ DE FABRICATION D'UN AGENCEMENT DE PILES À COMBUSTIBLE

(30) Priorität: 25.09.2020 DE 102020212103
(43) Veröffentlichungstag der Anmeldung: 02.08.2023
(73) Patentinhaber: Vitesco Technologies GmbH, 93055 Regensburg (DE)
(72) Erfinder: OCHS, Markus, 80687 München (DE); GRANZOW, Stefan, 80687 München (DE)
(74) Vertreter: Vitesco Technologies
(86) Internationale Anmeldenummer: PCT/EP2021/076334
(87) Internationale Veröffentlichungsnummer: WO 2022/063973

(56) Entgegenhaltungen:
- DE-A1-102012 221 407
- US-A1- 2002 110 722
- US-A1- 2004 115 511
- US-A1- 2018 241 067

## Beschreibung

Die vorliegende Erfindung betrifft eine mehrteilige Brennstoffzellen-Endplatte.

Endplatten werden an beiden Enden von einer Brennstoffzellenanordnung bzw. "Stack" angebracht, um dem Stack Stabilität zu verleihen und einen angepassten Druck auf gestapelten Brennstoffzellen auszuüben. Der Stack" oder Brennstoffzellenstapel weist in einer Stapelrichtung gestapelt angeordnete Brennstoffzellen auf, die jeweils plattenförmig ausgebildet sind und sich orthogonal zur Stapelrichtung betrachtet jeweils in einer ersten Querrichtung und einer dazu orthogonalen zweiten Querrichtung erstrecken.

Bekannte Brennstoffzellen-Endplatten können aus mehreren Teilen oder Teilsegmenten bestehen, die jedoch zu einer gemeinsamen, mechanischen Einheit oder Platte fixiert sind. Mechanische Kräfte werden über eine Verspann- oder Zugvorrichtung auf die Platte, und damit in den Stapel und auf die Brennstoffzelle eingeleitet. Hierbei wird die gesamte Endplatte über eine mechanische Verspannung auf den Stapel gedrückt, unabhängig davon, aus wie vielen Teilen oder Segmenten sie auch besteht.

Brennstoffzellen weisen jeweils in der Stapelrichtung gestapelt auf:
- eine anodenseitige Bipolar-Halbplatte mit einer Brennstoff-Kanalstruktur zur Führung eines Brennstoffes,
- eine anodenseitige Gasdiffusionslage,
- eine Membran-Elektroden-Einheit MEA, aufweisend eine Elektrolytmembran und in Stapelrichtung beiderseits davon angeordnete Elektrodenschichten, die eine Anode und eine Kathode für eine elektrochemische Reaktion des Brennstoffes mit einem Oxidationsmittel ausbilden,

- eine kathodenseitige Gasdiffusionslage,
- eine kathodenseitige Bipolar-Halbplatte mit einer Oxidationsmittel-Kanalstruktur zur Führung des Oxidationsmittels.

Zum Stand der Technik derartiger Brennstoffzellenstapel sei beispielhaft auf die Veröffentlichungen EP 2 357 698 B1, EP 2 445 045 B1, EP 2 584 635 B1, EP 2 946 431 B1 und EP 3 316 377 A1 verwiesen.

Brennstoffzellenstapel werden typisch mittels Spannbolzen oder Schrauben und Federelementen mechanisch verspannt. Zudem gibt es Lösungen, die ein (meist metallisches) Band um den Stapel führen, welches dann an Befestigungspunkten an den Endplatten des Stapels befestigt und vorgespannt werden; siehe hierzu z.B. US 2006/093890 (Steinbroner). Eine ergänzende Lösung ist auf Zahn- oder Keilriemen basierende Verspannungen, die auf mehrere Riemen samt mehrerer Verspann-Einheiten basieren.

Insbesondere die homogene Kraftverteilung auf den aktiven Zellbereich erfordert große Halte- oder Verspannkräfte. Darum sind die mechanischen Konstruktionen der Endplatte teils massiv ausgeführt. Da die Dichtungsebenen und die Führung der Einzelzellen ebenfalls mechanisch gehalten und angepresst werden müssen, besteht hier ebenfalls die Anpresskraft, die auf der aktiven Fläche anliegt.

Aus der DE 10 2012 221 407 A1 sowie aus der US 2004/0115511 A1 sind Endplatten für Brennstoffzellenstapel bekannt. Ein Druckverteilungselement soll jeweils für eine gleichmäßige Druckverteilung in den Stapel sorgen.

Die US 2018/0241067 A1 offenbart eine profilierte Endplatte, mit welcher unterschiedliche Drücke auf verschiedene Stapelbereiche erreicht werden können. Aus der US 2002/110722 A1 ist ferner ein zwischen der Endplatte und dem Stapel angeordnetes Druckausgleichselement bekannt.

Die hohe Verspannkraft der aktiven Fläche eines Stapels kann dazu führen, dass im Dichtungsbereich ebenso hohe Ansprüche an die mechanische Führung und die Kraftaufnahme herrschen. Die Konstruktion der Endplatte und der Führungsebene ist dementsprechend kompliziert. Zudem stellt der Vorgang des Verspannens einen hohen Anspruch an eben genannte Führungsebene wie z.B. Stapelhilfen, Gleit-Führung, etc., und auch an den Verspannprozess selbst. Hier muss gleichzeitig die Bewegung der Platten, der MEA-Einzellagen und der Dichtungen beachtet werden.

Der Erfindung liegt daher die Aufgabe zu Grunde, die oben genannten Probleme zu vermeiden.

Die Aufgabe wird gelöst durch eine Brennstoffzellenanordnung und ein Verfahren zur Herstellung einer Brennstoffzellenanordnung gemäß den unabhängigen Ansprüchen. Vorteilhafte Weiterbildungen der Erfindung sind in den abhängigen Ansprüchen angegeben.

Eine erfindungsgemäße Brennstoffzellenanordnung weist einen Brennstoffzellenstapel auf mit einer Mehrzahl von in einer Stapelrichtung gestapelten Komponenten sowie mit mindestens einer Endplatte, wobei die mindestens eine Endplatte eine Mehrzahl von Segmenten aufweist.

Die zu einem Stapel angeordneten Komponenten entsprechen vorzugsweise den oben beschriebenen Brennstoffzellen und sind beispielsweise im Wesentlichen plattenförmig ausgebildet. Der Stapel schließt an mindestens einem Ende bevorzugt an zwei in Stapelrichtung gegenüberliegenden Enden jeweils mit einer Endplatte ab. Die Endplatte selbst kann dabei prinzipiell einen Teil einer Brennstoffzelle bilden, oder aber direkt oder indirekt an eine solche anschließen, benachbart zu einer solchen angeordnet sein, bzw. auf einer solchen aufliegen. Das Wort "abschließen" soll in diesem Zusammenhang und im Rahmen dieser Anmeldung breit aufgefasst werden und die genannten Varianten umfassen. Erfindungsgemäß weist dabei mindestens eine Endplatte eine Mehrzahl von Segmenten auf, die vorzugsweise separate Teile sind. Die mindestens eine Endplatte ist somit vorzugsweise mehrteilig ausgeführt, wobei die separaten Teile nicht fest miteinander verbunden sind.

Gemäß einer bevorzugten Ausführungsform der Erfindung ist die mindestens eine Endplatte lateral-segmentiert ausgeführt. D.h. die Endplatte besteht aus mehreren nicht zusammenhängenden teilen, die orthogonal zur Stapelrichtung beispielsweise nebeneinander oder ineinander angeordnet sind. Diese sollen bei einer Verspannung des Stapels die Krafteinwirkung auf verschiedene Bereiche des Stapels z.B. auf einen aktiven Zellbereich und einen Dichtungsbereich sowie sonstige Segmente der Zellen getrennt voneinander ermöglichen. Dies kann insbesondere durch ineinander-liegende Platten realisiert werden, die nicht- oder nur teilweise mechanisch in Kontakt treten.

Zum einen wird mit dieser Lösung die Verspannkraft optimal auf die unterschiedlichen Anforderungen im aktiven Bereich, im Dichtungsbereich und ggf. anderen, mechanisch-verspannten Bereichen angepasst. Jedes einzel-Segment der Endplatte kann mit den dafür vorgesehenen Kräften verspannt werden, damit kann der konstruktive Aufwand in der Entwicklung der Zell-Geometrie reduziert werden, auch die mechanischen Ansprüche an z.B. die Dichtung selbst können optimiert werden.

Zum anderen ermöglicht eine segmentierte Endplatte einen sequenziellen Verspannprozess. Hierbei kann jede zu verspannende Lage oder Segment einzeln vor- und verspannt werden, je nach Bedarf. Dies reduziert auch den Anspruch im Stapelprozess selbst, weil mechanische Haltekräfte, Dichtungslagen
und die aktive Fläche mit elektrischen Kontaktwiderstand in optimaler Reihenfolge erfolgen können.

Mit einer Brennstoffzellenanordnung kann durch eine elektrochemische Reaktion die chemische Reaktionsenergie eines kontinuierlich zugeführten Brennstoffes (z. B. Wasserstoff) und eines kontinuierlich zugeführten Oxidationsmittels (z. B. Sauerstoff oder Luft) in elektrische Energie gewandelt werden.

Im Betrieb der über die (elektrisch leitfähigen) Bipolar-Halbplatten in elektrischer Reihenschaltung angeordneten Brennstoffzellen müssen die Reaktanten der elektrochemischen Reaktion, also der Brennstoff (z. B. Wasserstoff) und das Oxidationsmittel (z. B. Luft), auf in Stapelrichtung betrachtet unterschiedlichen Seiten der Membran-Elektroden-Einheit innerhalb jeder Brennstoffzelle zugeführt werden.

Zu diesem Zweck sind die Bipolar-Halbplatten jeder Brennstoffzelle auf ihren der Membran-Elektroden-Einheit zugewandten Seiten oft mit einer Kanalstruktur ausgebildet, um den Brennstoff und das Oxidationsmittel auf den jeweiligen Seiten der Membran-Elektroden-Einheit über diese Kanalstrukturen in die dort angrenzende jeweilige Gasdiffusionslage einzubringen und somit über die jeweilige Gasdiffusionslage an die jeweilige Elektrodenschicht auf der entsprechenden Seite der Elektrolytmembran heranzuführen.

Die Elektrodenschichten sind üblicherweise aus einem Kohlenstoffmaterial gebildet und mit einem geeigneten Katalysator beschichtet bzw. durchsetzt. Die brennstoffseitige Elektrodenschicht bildet hierbei eine Anode und die oxidationsmittelseitige Elektrodenschicht eine Kathode der Membran-Elektroden-Einheit.

Das Produkt der in den einzelnen Brennstoffzellen ablaufenden elektrochemischen Reaktion, beispielsweise Wasser, kann über den Oxidationsmittel (z. B. Luft)-führenden Brennstoffzellenbereich abgeführt werden.

In den einzelnen Brennstoffzellen müssen der Brennstoff-führende Bereich, d.h. anodenseitige Kanalstruktur, Gasdiffusionslage, Elektrodenschicht (Anode), und der Oxidationsmittel-führende Bereich, d.h. kathodenseitige Kanalstruktur, Gasdiffusionslage, Elektrodenschicht (Kathode), gegeneinander abgedichtet sein, um einen der Leistungseffizienz abträglichen Gasaustausch zwischen diesen Bereichen zu verhindern.

Dies impliziert insbesondere, dass wenigstens einer der beiden Bereiche gegen die Umgebung der Brennstoffzelle bzw. des Brennstoffzellenstapels (z. B. Atmosphäre) hin abgedichtet sein muss, um einen solchen Austausch über die Umgebung zu unterbinden. In der Praxis wird hierbei zumindest der Brennstoff-führende Bereich gegenüber der Umgebung abgedichtet, um einen Verlust von Brennstoff aus diesem Brennstoffzellenbereich in die Umgebung sowie einen Eintrag eines Mediums (z. B. Luft) aus der Umgebung in diesen Brennstoffzellenbereich hinein zu verhindern.

Insbesondere zur Ausbildung einer luftgekühlten Brennstoffzellenanordnung kann der Oxidationsmittel-führende Bereich auch "offen" zur Umgebung hin ausgestaltet sein. Beispielsweise kann die bei den einzelnen Brennstoffzellen vorgesehene Oxidationsmittel-Kanalstruktur an zwei in einer Querrichtung betrachtet einander entgegengesetzten Seiten der Brennstoffzelle offen sein, um im Betrieb eine Strömung des Oxidationsmittels (z. B. Luft) in dieser Querrichtung durch die Brennstoffzellenanordnung hindurch zu ermöglichen. Hierfür kann das Oxidationsmittel z. B. mit einem Gebläse durch die seitlich offene Brennstoffzellenanordnung hindurchgetrieben werden und hierbei zugleich für eine Kühlung sorgen.

In vielen Fällen ist es jedoch vorteilhafter, wenn sowohl der Brennstoff-führende Bereich als auch der Oxidationsmittel-führende Bereich des Brennstoffzellenstapels gegeneinander und zur Umgebung hin abgedichtet sind.

Für derartige Abdichtungen üblich sind z. B. separat gefertigte und zwischen Bipolarplatte und Membran-Elektroden-Einheit eingelegte Dichtungen, oder z. B. ein Dispensen/Aufspritzen von Dichtungsmaterial an jeweiligen Komponenten der Brennstoffzellen (z. B. Bipolarplatte, Membran-Elektroden-Einheit) während eines Montageprozesses, oder eine Vorfertigung von Komponenten der Brennstoffzellen mit bereits daran angeformten Dichtungen.

Als aktiver Bereich wird insbesondere der orthogonal zur Stapelrichtung ausgeprägte Bereich genannt, in dem die elektrochemische Reaktion zwischen Brennstoff und Oxidationsmittel stattfindet. Üblicherweise erstreckt sich der aktive Bereich der einzelnen Brennstoffzellen orthogonal zur Stapelrichtung flächig um das Zentrum der plattenförmigen Komponenten, während der Dichtungsbereich den aktiven Bereich umschließt. Im Brennstoffzellenstapel umschließt der Dichtungsbereich somit beispielsweise den aktiven Bereich des Stapels mantelförmig. Auch ein Zu-/Abführungs- oder Verteilbereich für Brennstoff, Oxidationsmittel und ggf. Kühlmittel kann von dem Dichtungsbereich eingeschlossen oder umfasst sein.

Erfindungsgemäß umfasst mindestens eine Endplatte des Stapels mindestens ein erstes Segment, welches einem ersten funktionellen Bereich des Stapels zugeordnet ist, bzw. diesen in Stapelrichtung abschließt und mindestens ein zweites Segment, welches einem zweiten funktionellen Bereich des Stapels zugeordnet ist, bzw. diesen in Stapelrichtung abschließt. Vorzugsweise sind das erste und das zweite Segment weitgehend unabhängig voneinander mit dem Stapel verspannbar. So kann durch Verspannen über das mindestens eine erste Segment eine erste Kraft auf den ersten funktionellen Bereich des Brennstoffzellenstapels ausgeübt werden, und durch Verspannen über das mindestens eine zweite Segment eine zweite Kraft auf den zweiten funktionellen Bereich des Brennstoffzellenstapels ausgeübt werden. Die zur Kompression auf den ersten bzw. auf den zweiten funktionellen Bereich des Stapels aufgebrachten Kräfte sind so vorzugsweise weitgehend unabhängig voneinander einstellbar. Insbesondere können die erste und die zweite Kraft voneinander verschieden sein. Das zweite Segment umschließt das erste Segment dann beispielsweise umfangsseitig.

Analog sind auch Ausführungsformen mit mehr als zwei Endplattensegmenten für die gezielte Krafteinleitung auf mehr als zwei funktionelle Bereiche des Brennstoffzellenstapels möglich und von der Erfindung erfasst.

Als funktionelle Bereiche des Brennstoffzellenstapels werden in dieser Anmeldung beispielsweise die oben beschriebenen Bereiche: aktiver Bereich, Dichtungsbereich, Zu-/Abführungs- oder Verteilbereich für Brennstoff, Oxidationsmittel und ggf. Kühlmittel bezeichnet.

Die mindestens eine Endplatte ist dafür vorzugsweise lateral segmentiert. Sie kann aber in anderen Ausführungsformen auch horizontal und/oder axial segmentiert sein.

In einer bevorzugten Variante ist die Endplatte so segmentiert, dass mehrere Segmente beim Verspannen ineinandergreifen. Dies kann beispielsweise durch eine stufenweise-abgesetzte Segmentierung erreicht werden.

Vorteilhaft ist beispielsweise eine Variante, bei welcher die Segmente so ineinandergreifen, dass durch Verspannen des aktiven Bereichs des Stapels über ein erstes Segment der Endplatte auch eine Vorspannung auf das zweite Segment und somit den Dichtungsbereich des Stapels ausgeübt wird. Der Dichtungsbereich kann dann anschließend über eine weitere Verspannung über das zweite Segment beispielsweise mit einer noch höheren Kompressionskraft beaufschlagt werden. Analog ist dies auch umgekehrt denkbar, wobei durch Verspannen des zweiten Segments eine Vorspannung auf das erste Segment ausgeübt wird.

In einigen Ausführungsformen sind die Brennstoffzellen der Brennstoffzellenanordnung für einen Betrieb mit Wasserstoff als Brennstoff geeignet ausgebildet, z. B. mit einer als Protonenleitmembran ausgebildeten Elektrolytmembran.

Alternativ kommt jedoch auch z. B. eine Ausbildung der Brennstoffzellenanordnung für einen Betrieb mit einem anderen Brennstoff wie z. B. einer organischen Verbindung (z. B. Methan oder Methanol) oder z. B. Erdgas in Betracht.

In einer Ausführungsform ist die Brennstoffzellenanordnung für einen Betrieb mit Luft als Oxidationsmittel geeignet ausgebildet.

In einer Ausführungsform sind die Bipolar-Halbplatten aus einem metallischen Material gebildet. Alternativ können die Bipolar-Halbplatten insbesondere z. B. aus einem Kohlenstoffmaterial oder z. B. aus einem elektrisch leitenden Kunststoffmaterial (z. B. entsprechend dotiert, z. B. mit Ruß) gebildet sein, oder aus einem anderen elektrisch leitfähigen Material.

Gemäß einer Ausführungsform werden die bei der Erfindung vorgesehenen Bipolar-Halbplatten und Endplatten jeweils separat voneinander vorgefertigt und bei der Herstellung der Brennstoffzellenanordnung durch ein Stapeln der einzelnen Komponenten entsprechend in den Stapel eingefügt.

Gemäß einem weiteren Aspekt betrifft die Erfindung ein Verfahren zur Herstellung einer Brennstoffzellenanordnung.

Die Erfindung wird nachfolgend anhand von Ausführungsbeispielen mit Bezug auf die beigefügten Zeichnungen weiter beschrieben. Es stellen jeweils schematisch dar:
- Fig. 1: eine zweiteilige Endplatte, und
- Fig. 2: eine einteilige Endplatte.

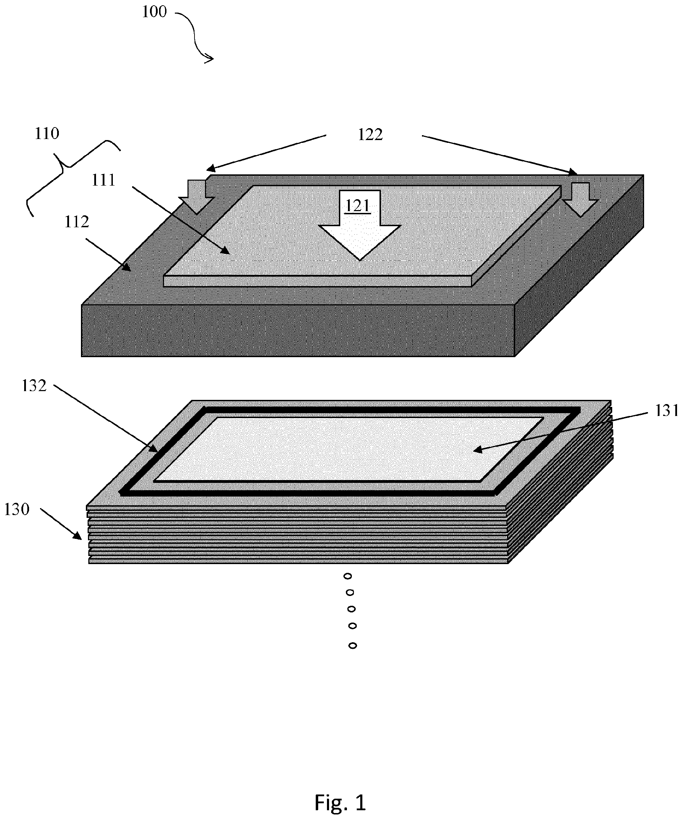

Fig. 1 zeigt eine Brennstoffzelle 100 mit einer Endplatte 110 aus zwei Segmenten 111 und 112. Die Brennstoffzelle ist jeweils aus einer Mehrzahl von plattenförmig formgestalteten und in Stapelrichtung gestapelt angeordneten Komponenten zusammengesetzt, mit plattenförmigen Endplatten an den jeweiligen Enden des Stapels. Die Endplattensegmenten üben Kräfte 121 und 122 auf dem Zellstapel oder Stack 130 aus. Insbesondere wird Kraft 121 auf einen aktiven Bereich 131 ausgeübt, und Kraft 122 wird auf einen Dichtungs-Bereich 132 ausgeübt.

Die Endplatten dienen zur Stabilität des Stapels, und werden deshalb an den beiden Enden in der Stapelrichtung angebracht. Jedoch wird mehr Stabilität in dem Dichtungsbereich benötigt als im aktiven Bereich. Generell sind die Endplatten mechanisch stabiler als die Bipolarplatten in der Mitte vom Stapel. Die homogene Kraftverteilung auf den aktiven Zellbereich erfordert große Verspannkräfte 121. Darum sind die mechanischen Konstruktionen der Endplatte teils massiv ausgeführt.

Die Dichtungsebenen und die Führung der Einzelzellen werden ebenfalls mechanisch gehalten und angepresst. Hier besteht ebenfalls eine Anpresskraft 122, die auf der aktiven Fläche anliegt. Somit kann das äußere Segment 112 mehr Druck auf das Dichtungsbereich ausüben als das innere Segment 111 Druck auf den aktiven Bereich ausübt oder umgekehrt, je nach Bedarf. Die Endplatten können ineinander-liegend realisiert werden, wobei die Segmente nicht- oder nur teilweise mechanisch in Kontakt treten.

Eine Endplatte kann aus zwei Segmente bestehen, oder aus mehr als zwei Segmenten. Jedes einzel-Segment der Endplatte kann mit den dafür vorgesehenen Kräften verspannt werden, womit der konstruktive Aufwand in der Entwicklung der Zell-Geometrie reduziert werden kann. Die mechanischen Ansprüche an Elemente wie die Dichtung oder Dichtungsbereich können ebenfalls optimiert werden.

Über eine mechanische Verspannung wird die gesamte Endplatte auf den Stapel gedrückt, unabhängig davon, aus wie vielen Teilen oder Segmenten sie auch besteht. Die hohe Verspannkraft der aktiven Fläche eines Stapels könnte dazu führen, dass im Dichtungsbereich hohe Ansprüche an die mechanische Führung und an die Kraftaufnahme herrschen könnte. Die lateral-segmentierten mehrteiligen Endplatten ermöglichen eine getrennte Krafteinwirkung auf z.B. aktiven Zellbereich und Dichtungsbereich sowie sonstige Segmente der Zellen. Wegen der segmentierten Endplatte ist auch ein sequenzieller Verspannprozess möglich. Hierbei wird jedes zu verspannende Segment einzeln verspannt bzw. eine Verspannkraft eingestellt. Dies kann auch den Anspruch im Stapelprozess reduzieren, weil mechanische Haltekräfte, Dichtungslagen
und die aktive Fläche mit elektrischem Kontaktwiderstand in optimaler Reihenfolge in die Verspannung einbezogen werden können.

In verschiedene Ausführungen der Erfindung ist die Segmentierung eine laterale Segmentierung, axiale oder horizontale Segmentierung oder eine Kombination aus beidem. Es können auch stufenweise-abgesetzte Segmente ausgeführt werden, die beim Verspann-Vorgang ineinandergreifen. Es können auch Stapel gebildet werden, mit einer segmentierten Endplatte (z.B. am oberen Stapel-Ende) und einer nicht-segmentierten Endplatte (z.B. am unteren Stapel-Ende).

Die Endplatten können aus dem gleichen Material wie die Bipolarplatten bestehen, oder aber sie können aus einem anderen Material bestehen. Brennstoffzellen-Stapeln werden typisch mittels Spannbolzen oder Schrauben, und ggf. Federelementen, mechanisch verspannt. Zudem gibt es Lösungen, die ein meist metallisches Band um den Stapel führen, welches dann an 1 oder 2 Befestigungspunkten an den Endplatten des Stapels befestigt und vorgespannt wird.

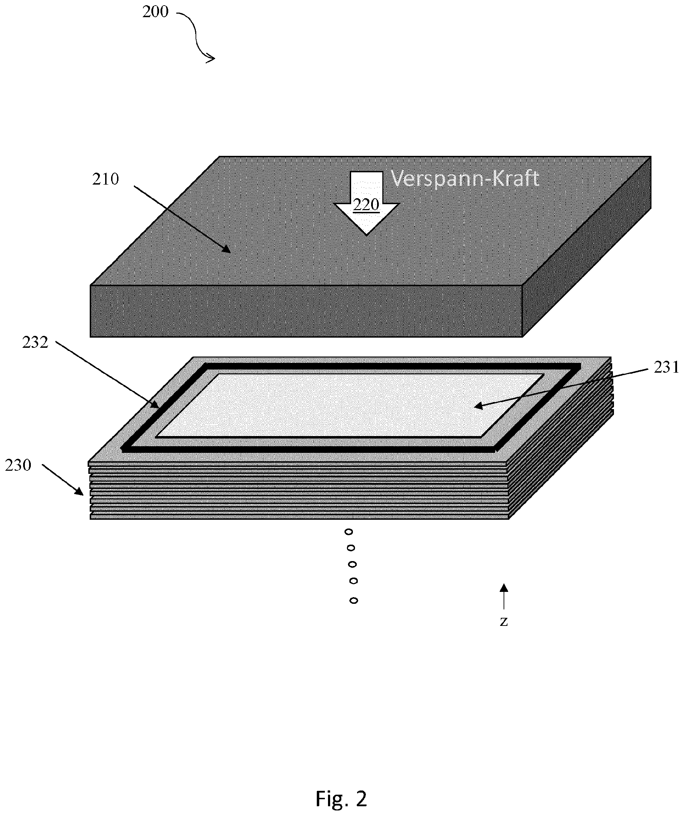

Eine einteilige Endplatte ist in Figur 2 abgebildet. Figur 2 zeigt eine Brennstoffzelle 200 mit einer Endplatte 210. Die Brennstoffzelle ist jeweils aus einer Mehrzahl von plattenförmig formgestalteten und in Stapelrichtung gestapelt angeordneten Komponenten zusammengesetzt, mit plattenförmigen Endplatten an den jeweiligen Enden des Stapels. Die Endplatte übt Kraft 220 auf den Zellstapel oder Stack 230 aus, insbesondere auf einen aktiven Bereich 231 und auf den Dichtungs-Bereich 232.

Die Endplatten müssen für den ausgeübten Druck ausgestaltet sein. Sie können z.B. aus ein Stahl oder einem anderen Metall geformt werden oder bestehen. Die Endplatten können auch aus einem elektrisch nicht-leitenden Material bestehen, wie z.B. Polymerverbindungen. Jedoch müssen die benötigten mechanischen Eigenschaften gewährleistet werden.

## Patentansprüche

1. Brennstoffzellenanordnung (100, 200), aufweisend einen Brennstoffzellenstapel (130, 230) mit einer Mehrzahl von in einer Stapelrichtung (z) gestapelten, plattenförmigen Komponenten,
sowie mit mindestens einer Endplatte,
wobei die mindestens eine Endplatte (110, 210) eine Mehrzahl von Segmenten (111, 112) aufweist, die als separate Teile ausgeführt sind, und wobei die mindestens eine Endplatte (110) des Stapels mindestens ein erstes Segment (111) aufweist, welches einen ersten funktionellen Bereich (131) des Stapels abschließt und mindestens ein zweites Segment (112), welches einen zweiten funktionellen Bereich (132) des Stapels abschließt, wobei die Segmente einzeln verspannbar sind, so dass durch Verspannen über das mindestens eine erste Segment (111) eine erste Kraft (121) auf den ersten funktionellen Bereich (131) des Brennstoffzellenstapels (130) ausgeübt wird, und durch Verspannen über das mindestens eine zweite Segment (112) eine zweite Kraft (122) auf den zweiten funktionellen Bereich (132) des Brennstoffzellenstapels ausgeübt wird.

2. Brennstoffzellenanordnung nach Anspruch 1, wobei die mindestens eine Endplatte (110) lateral segmentiert ist.

3. Brennstoffzellenanordnung nach einem der vorherigen Ansprüche, wobei mindestens eine Endplatte (110) axial oder horizontal segmentiert ist.

4. Brennstoffzellenanordnung nach einem der vorherigen Ansprüche, wobei mindestens eine Endplatte (110) mit stufenweise-abgesetzten Segmenten ausgeführt ist.

5. Brennstoffzellenanordnung nach einem der vorherigen Ansprüche, wobei mindestens eine Endplatte (110) aus Segmenten besteht, welche bei einem Verspann-Vorgang ineinandergreifen.

6. Brennstoffzellenanordnung nach einem der vorherigen Ansprüche, bei dem eine Endplatte segmentiert ist, und die andere Endplatte nicht segmentiert ist.

7. Brennstoffzellenanordnung nach einem der vorherigen Ansprüche, wobei mindestens eine Endplatte aus Segmenten besteht, und wobei die Endplatte aus Metall oder aus einem Material besteht, das elektrisch nicht leitfähig ist.

8. Verfahren zur Herstellung einer Brennstoffzellenanordnung (100, 200) nach einem der vorherigen Ansprüche,
mit den Schritten:
- Bilden einer Brennstoffzellenanordnung (100, 200) durch
- stapelndes Anordnen von einem Brennstoffzellenstapel (130, 230) in einer Stapelrichtung (z), und
- stapelndes Anordnen von Endplatten an den beiden Enden des Stapels in der Stapelrichtung z,
wobei mindestens eine Endplatte (110, 210) eine Mehrzahl von Segmenten (111, 112) aufweist,
**dadurch gekennzeichnet, dass**
die Segmente (111, 112) einzeln verspannt und mit unterschiedlichen Verspannkräften beaufschlagt werden.

9. Verfahren zur Herstellung einer Brennstoffzellenanordnung (100, 200) nach Anspruch 8, wobei die einzelnen Segmente sequenziell oder gleichzeitig mit der jeweilig einzustellenden Verspannkraft beaufschlagt werden.

## Claims

1. Fuel cell arrangement (100, 200) having a fuel cell stack (130, 230) comprising a plurality of plate-shaped components stacked in a stacking direction (z),
and at least one end plate,
wherein the at least one end plate (110, 210) has a plurality of segments (111, 112) in the form of separate parts,
and wherein the at least one end plate (110) of the stack has at least one first segment (111), which terminates a first functional region (131) of the stack, and at least one second segment (112), which terminates a second functional region (132) of the stack,
wherein the segments can be individually clamped, with the result that clamping over the at least one first segment (111) causes a first force (121) to be exerted on the first functional region (131) of the fuel cell stack (130), and clamping over the at least one second segment (112) causes a second force (122) to be exerted on the second functional region (132) of the fuel cell stack.

2. Fuel cell arrangement according to Claim 1, wherein the at least one end plate (110) is laterally segmented.

3. Fuel cell arrangement according to either of the preceding claims, wherein at least one end plate (110) is axially or horizontally segmented.

4. Fuel cell arrangement according to one of the preceding claims, wherein at least one end plate (110) is designed with segments that are offset in stages.

5. Fuel cell arrangement according to one of the preceding claims, wherein at least one end plate (110) consists of segments which engage in one another during a clamping operation.

6. Fuel cell arrangement according to one of the preceding claims, wherein one end plate is segmented and the other end plate is not segmented.

7. Fuel cell arrangement according to one of the preceding claims, wherein at least one end plate consists of segments, and wherein the end plate consists of metal or of a material which is electrically non-conductive.

8. Method for producing a fuel cell arrangement (100, 200) according to one of the preceding claims,
comprising the following steps:
- forming a fuel cell arrangement (100, 200) by
- stacking a fuel cell stack (130, 230) in a stacking direction (z), and
- stacking end plates at either end of the stack in the stacking direction z,
wherein at least one end plate (110, 210) has a plurality of segments (111, 112).
**characterized in that**
the segments (111, 112) are individually clamped and have different clamping forces applied to them.

9. Method for producing a fuel cell arrangement (100, 200) according to Claim 8, wherein the individual segments are subjected sequentially or simultaneously to the respective clamping force to be set.

## Revendications

1. Agencement de piles à combustible (100, 200), présentant un empilement de piles à combustible (130, 230) avec une pluralité de composants en forme de plaques empilés dans une direction d'empilement (z),
ainsi qu'avec au moins une plaque d'extrémité,
ladite au moins une plaque d'extrémité (110, 210) présentant une pluralité de segments (111, 112) qui sont réalisés sous forme de pièces séparées,
et ladite au moins une plaque d'extrémité (110) de l'empilement présente au moins un premier segment (111) qui ferme une première zone fonctionnelle (131) de l'empilement et au moins un deuxième segment (112) qui ferme une deuxième zone fonctionnelle (132) de l'empilement,
les segments étant aptes à être serrés individuellement, de sorte qu'une première force (121) est exercée sur la première zone fonctionnelle (131) de l'empilement de piles à combustible (130) par serrage via ledit au moins un premier segment (111), et une deuxième force (122) est exercée sur la deuxième zone fonctionnelle (132) de l'empilement de piles à combustible par serrage via ledit au moins un deuxième segment (112).

2. Agencement de piles à combustible selon la revendication 1, dans lequel ladite au moins une plaque d'extrémité (110) est segmentée latéralement.

3. Agencement de piles à combustible selon l'une des revendications précédentes, dans lequel au moins une plaque d'extrémité (110) est segmentée axialement ou horizontalement.

4. Agencement de piles à combustible selon l'une des revendications précédentes, dans lequel au moins une plaque d'extrémité (110) est réalisée avec des segments étagés.

5. Agencement de piles à combustible selon l'une des revendications précédentes, dans lequel au moins une plaque d'extrémité (110) est constituée de segments qui s'imbriquent les uns dans les autres lors d'un processus de serrage.

6. Agencement de piles à combustible selon l'une des revendications précédentes, dans lequel une plaque d'extrémité est segmentée et l'autre plaque d'extrémité n'est pas segmentée.

7. Agencement de piles à combustible selon l'une des revendications précédentes, dans lequel au moins une plaque d'extrémité est constituée de segments, et dans lequel la plaque d'extrémité est en métal ou en un matériau qui n'est pas conducteur de l'électricité.

8. Procédé de fabrication d'un agencement de piles à combustible (100, 200) selon l'une des revendications précédentes,
comprenant les étapes suivantes :
- former un agencement de piles à combustible (100, 200) par
- l'empilement de piles à combustible (130, 230) dans une direction d'empilement (z), et
- l'empilement des plaques d'extrémité aux deux extrémités de l'empilement dans la direction d'empilement z,
au moins une plaque d'extrémité (110, 210) comprenant une pluralité de segments (111, 112),
**caractérisé en ce que**
les segments (111, 112) sont serrés individuellement et soumis à des forces de serrage différentes.

9. Procédé de fabrication d'un agencement de piles à combustible (100, 200) selon la revendication 8, dans lequel les différents segments sont sollicités de manière séquentielle ou simultanée avec la force de serrage respective à régler.
